# EUROPÄISCHE PATENTSCHRIFT

(11) **EP 3 243 676 B1**
(45) Veröffentlichungstag und Bekanntmachung des Hinweises auf die Patenterteilung: **12.04.2023**
(21) Anmeldenummer: 17169209.8
(22) Anmeldetag: 03.05.2017
(51) Int. Cl.: B60H 1/00, B60H 1/32, H02P 9/14, H02P 9/10

(54) **KÜHLSYSTEM**
COOLING SYSTEM
SYSTÈME DE REFROIDISSEMENT

(30) Priorität: 13.05.2016 DE 102016005982
(43) Veröffentlichungstag der Anmeldung: 15.11.2017
(73) Patentinhaber: Liebherr-Transportation Systems GmbH & Co. KG, 2100 Korneuburg (AT)
(72) Erfinder: Tonchev, Anton, 1220 Wien (AT); Radler, Dominik, 1160 Wien (AT); Kitanoski, Filip, 1060 Wien (AT)
(74) Vertreter: Laufhütte, Dieter

(56) Entgegenhaltungen:
- EP-A1- 0 009 848
- DE-A1-102008 004 269
- DE-B3-102005 042 817
- US-A- 5 086 266
- US-A1- 2013 248 165
- KOJI YAMASHITA ET AL: "A study on dynamic behavior of load supply system including synchronous generators with and without load drop", 2010 IEEE POWER AND ENERGY SOCIETY GENERAL MEETING : [IEEE PES-GM 2010] ; MINNEAPOLIS, MINNESOTA, USA, 25 - 29 JULY 2010, IEEE, PISCATAWAY, NJ, USA, 25 July 2010 (2010-07-25), pages 1-7, XP031985689, DOI: 10.1109/PES.2010.5589816 ISBN: 978-1-4244-6549-1

## Beschreibung

Die Erfindung betrifft ein Kühlsystem zum Kühlen einer Transporteinheit, insbesondere eines Kühl-Sattelaufliegers, eines Kühlanhängers oder eines Kühltransportcontainers.

Bei einem herkömmlichen Kühlsystem für eine Transporteinheit sind der Kältekreis und dessen Verbraucher so dimensioniert, dass diese den gesamten Betriebsbereich abdecken können. Wenn beispielsweise die elektrischen Antriebsmaschinen in dem Kältekreis (Lüfter, Kompressoren, Drossel oder andere E-Maschinen) hart an das Netz zugeschaltet werden, muss das Energieversorgungssystem des Kühlsystems die hierzu erforderlichen Anlaufströme bzw. die hierzu erforderliche Leistung zur Verfügung stellen können. Typischerweise ist jedoch die installierte Kälteleistung des Kühlsystems bei gewissen Betriebspunkten, beispielsweise im Falle eines Pulldowns, also dem Herunterkühlen eines zu kühlenden Raums von der Umgebungstemperatur, und die dabei einhergehende installierte elektrische Leistungsaufnahme der Verbraucher viel größer als die von einer Primärenergiequelle bzw. eines Generators zur Verfügung stellbare Leistung.

Typischerweise löst der Stand der Technik dieses Problem durch das Vorsehen einer überdimensionierten Primärenergiequelle bzw. eines überdimensionierten Generators oder durch komplexe Betriebsstrategien, die eine Begrenzung der maximalen Stromaufnahme der an der Energieversorgung hängenden Verbraucher vorsehen (vgl. EP 2643177B1). Darüber hinaus ist es bekannt, die Funktionsrobustheit der Systeme durch Regelorgane im Kältekreis selbst zu gewährleisten.

Die DE 10 2008 004269 A1 zeigt ein herkömmliches Kühlsystem, welches die Merkmale aus dem Oberbegriff des Anspruchs 1 aufweist.

Nachteilhaft an den Umsetzungen aus dem Stand der Technik ist, dass eine überdimensionierte Primärenergiequelle oder ein überdimensionierter Generator in den Anschaffungskosten sowie im Betrieb teuer ist und die Grenzbereiche einer durch Primärenergiequelle und Generator erzeugten Energieversorgung nur in Ausnahmefällen in Anspruch genommen werden. Auch das Vorsehen von komplexen Betriebsstrategien zum Begrenzen der Stromaufnahme erfordert zusätzliche Ressourcen und ist zudem sehr aufwändig.

Die vorliegende Erfindung überwindet die vorstehend aufgeführten Probleme, indem sie ein Kühlsystem zum Kühlen einer Transporteinheit mit den Merkmalen des Anspruchs 1 vorschlägt.

Demnach umfasst das Kühlsystem zum Kühlen einer Transporteinheit u.a. einen Generator zum Bereitstellen einer Energieversorgung für das Kühlsystem, und mindestens ein an die Energieversorgung angebundenes Kältekreismodul, das eine schaltbare Antriebseinheit für ein Kältekreismodulelement aufweist. Das Kühlsystem ist dadurch gekennzeichnet, dass der Generator über eine Erregerregelung verfügt.

Das Kältekreismodul kann selbstverständlich eine Vielzahl von Kältekreismodulelementen aufweisen, die jeweils separat über eine zugehörige schaltbare Antriebseinheit antreibbar sind. Die Erregerregelung für den Generator, der die Energieversorgung für das Kühlsystem bereitstellt, an der das Kältekreismodul angebunden ist, erlaubt eine Reduktion der Anlaufströme bei einem Hinzuschalten eines Kältekreismodulelements. Durch die Reduktion der Anlaufströme beim Zuschalten von elektrischen Lasten, insbesondere beim Zuschalten eines Kältekreismodulelements, ist es möglich, den Generator im Vergleich zum Stand der Technik kleiner zu dimensionieren, da die Leistung bzw. die Stromaufnahme deutlich reduziert ist.

Nach der Erfindung ist die mindestens eine Antriebseinheit für das Kältekreismodulelement ein asynchroner Elektromotor. Durch das Ausführen der Antriebseinheit als asynchrone E-Maschine, die ja als induktive Last wirkt, ist es in Kombination mit der Erregerregelung des Generators möglich, die benötigte Leistung der Antriebseinheit bei einem harten Zuschalten soweit zu reduzieren, dass ein ungeregeltes hartes Zuschalten auf das vom Generator erzeugte elektrische Netz möglich ist. Die Erregerregelung sorgt im Zusammenspiel mit dem asynchronen Elektromotor eines Kältekreismodulelements dafür, dass die von dem Elektromotor verursachten Anlaufströme bzw. Anlaufmomente beherrschbar sind, um ein ungeregeltes Hochfahren des Kältekreismodulelements zu ermöglichen. Die im Stand der Technik üblichen Bauteile für ein sanftes Anlaufen der Antriebseinheiten (z.B. Frequenzumrichter) sind nicht mehr erforderlich.

Darüber hinaus sorgt die geregelte Generatorerregung für eine Dämpfung elektrischer Eigenschwingungen, die aufgrund verschiedener Impedanzen (Kabel, E-Maschinen, elektrische Schwingkreise, Filter etc.) im System vorhanden sind. Die Generatorerregung kann solche Schwingungen ausregeln, um keine Überspannungen im System während des harten Zuschaltens eines Kältekreismodulelements, beispielsweise eines Verdichters, entstehen zu lassen.

Gemäß der Erfindung erfolgt die Erregerregelung des Generators über den Erregerstrom des Generators, wobei die Höhe und die Steigung des Erregerstroms abhängig von dem aktuellen Lastmoment der Antriebseinheit sind.

Durch das Verknüpfen von der Ansteuerung des Erregerstroms und dem aktuellen Lastmoment der Antriebseinheit des Kältekreismodulelements wird ein robuster Betrieb des Kühlsystems ermöglicht.

Nach einer weiteren optionalen Fortbildung der Erfindung umfasst das System eine Regeleinheit, die ein Kennfeld aufweist, in welchem eine Höhe und eine Steigung eines für eine Erregerregelung verwendeten Erregerstroms in Abhängigkeit von einem Lastmoment der Antriebseinheit abgelegt sind, wobei vorzugsweise die Regeleinheit mit der Erregerregelung zusammenwirkt. Durch das Ablegen von Ansteuerparametern des Erregerstroms in einem Kennfeld ist es auf einfache Weise möglich, in Abhängigkeit des Lastmoments der Antriebseinheit den Generator mit einem hierfür optimalen Erregerstrom anzusteuern. Hierzu kann ein Bestimmen des aktuell vorherrschenden Lastmoments an der Antriebseinheit des Kältekreismodulelements notwendig sein.

Vorzugsweise umfasst demnach das System eine Erfassungseinheit zum Erfassen eines Lastmoments der Antriebseinheit, wobei die Erregerregelung ferner dazu ausgelegt ist, die Höhe und die Steigung des Erregerstroms auf die zu dem erfassten Lastmoment zugehörigen Werte des Kennfelds zu setzen.

Ferner kann die Erregerregelung dazu ausgelegt sein, eine bei einem harten Zuschalten der Antriebseinheit erforderliche Leistung und/oder Blindleistung durch ein entsprechendes Regeln des Generators bereitzustellen.

Nach der Erfindung ist vorgesehen, dass die Erregerregelung des Generators dazu ausgelegt ist, die benötigte Blindleistung des Kältekreismodulelements soweit zu reduzieren, dass ein hartes Aufschalten des Kältekreismodulelements auf das vom Generator erzeugte elektrische Netz möglich ist.

Gemäß einer optionalen Modifikation der Erfindung ist das Kältekreismodulelement ein Verdichter, ein Verdampferlüfter oder ein Verflüssigerlüfter.

Nach einer weiteren vorteilhaften Ausführungsform umfasst das Kühlsystem mindestens zwei, vorzugsweise drei Kältekreismodule, die jeweils an die vom Generator bereitgestellte Energieversorgung angebunden sind.

Durch den modularen Aufbau des Kühlsystems mit mindestens zwei Kältekreismodulen ergibt sich eine Reduktion der beim harten Zuschalten eines Kältekreismodulelements auf das elektrische Netz anfallenden Lastmomente. Dies deswegen, da die benötigte Gesamtkälteleistung auf die mindestens zwei Kältekreismodule, von denen jedes mindestens einen Verdichter besitzt, aufgeteilt werden kann. Somit ist es möglich, die zu überwindenden Lastmomente beim harten Aufschalten eines Kältekreismodulelements (beispielsweise eines Verdichters) zu reduzieren. Dies führt dazu, dass die vom Generator zur Verfügung gestellte Leistung ausreicht, um ein beliebiges Kältekreismodulelement (beispielsweise einen Verdichter) mit einem definierten Lastmoment auf das elektrische Netz hart aufzuschalten und hochzufahren. Dieser Vorteil leitet sich grundsätzlich aus der synergistischen Kombination der Erregerregelung des Generators und dem modulartigen Aufbau des Kühlsystems mit mindestens zwei Kältekreismodulen ab. Das stufenweise harte Zuschalten von Kältekreismodulelementen sowie die Erregerregelung des Generators führen somit zu einer optimalen Dimensionierung des Generators, da dieser nun nicht mehr für die typischerweise hohen Anlaufströme dimensioniert sein muss.

Nach einer weiteren Fortbildung umfasst das Kühlsystem eine Primärenergiequelle, die den Generator antreibt, wobei die Primärenergiequelle vorzugsweise eine Verbrennungskraftmaschine, bevorzugterweise ein Dieselmotor ist.

Nach einer weiteren Modifikation der Erfindung umfasst das Kühlsystem mit dem mindestens einem Kältekreismodul das zwei oder mehr Verdichter umfasst, die jeweils über eine Antriebseinheit verfügen.

Gemäß einer Modifikation der Erfindung umfasst das Kältekreismodul einen Verdichter, einen Verdampfer, eine Drossel und einen Verflüssiger, wobei vorzugsweise der Verdampfer und/oder der Verflüssiger mit einem Lüfter versehen sind.

Ferner kann nach der Erfindung vorgesehen sein, dass das Kältekreismodulelement eine Leistungsfaktorkorrekturregelung aufweist, um eine etwa sinusförmige Stromaufnahme am Generator zu ermöglichen.

Diese Leistungsfaktorkorrekturregelung, die auch PFC-Regelung (aus dem Englischen für "Power Factor Control") genannt wird, dient zur Wirkungsgraderhöhung der gesamten Antriebsleistung. Die aufgrund der Leistungsfaktorkorrekturregelung sinusförmige Aufnahme des Stroms am Generator reduziert dessen Erwärmung und erhöht den Wirkungsgrad des Gesamtsystems. Aus diesem Grund steht auch mehr Antriebsleistung zur Verfügung, da der Generator eine deutlich größere Reserve zur Verfügung hat. Zudem ist denkbar, dass die mit der Leistungsfaktorkorrekturregelung ausgestatteten Kältekreismodulelemente eine Drehzahlregelung aufweisen.

Nach einer weiteren vorteilhaften Modifikation der Erfindung liegt die Leistung der Primärquelle unter oder auf 18,9 Kilowatt, vorzugsweise unter oder auf 18,4 Kilowatt.

Zudem ist es nach der Erfindung möglich, den Wirkfaktor cos ϕ am Generator zu optimieren. Durch das Regeln des Erregerstroms kann der Wirkfaktor cos ϕ des gesamten Systems gezielt an die aktuell eingeschalteten Verbraucher bzw. Kältekreismodulelemente geregelt werden und somit zu einer Optimierung des Wirkungsgrads des Systems beitragen. Der Wirkfaktor cos ϕ beschreibt das Verhältnis von Wirkleistung zur Scheinleistung bei sinusförmigen Strömungen und Spannungen.

Weitere Merkmale, Details und Einzelheiten der Erfindung werden anhand des nachfolgend aufgeführten Ausführungsbeispiels ersichtlich.

Ein Kühlsystem zum Kühlen einer Transporteinheit verfügt hierbei über zwei Kältekreismodule, deren Energieversorgung von einem Generator des Kühlsystems bereitgestellt wird. Jedes der zwei Kältekreismodule umfasst dabei zumindest einen Verdichter, eine Drossel, einen Verdampfer und einen Verflüssiger. Ferner verfügt der Generator über eine Erregerregelung und eine schaltbare Antriebseinheit je Verdichter, wobei die Antriebseinheit jeweils eine asynchrone E-Maschine ist, die entweder einen Ein-Zustand oder einen Aus-Zustand einnehmen kann. Ein "hartes" Zuschalten eines Verdichters auf das Generatornetz erzeugt einen Anlaufstrom bzw. ein Anlaufmoment, das von dem elektrischen Netz des Generators beherrschbar sein muss, anderenfalls ist ein ungeregeltes Hochfahren des Verdichters nicht möglich. Aufgrund des Vorsehens der Erregerregelung des Generators sowie des modularen Grundaufbaus des Kühlsystems mit mindestens zwei Kältekreismodulen ist es möglich, einen Verdichter auf das durch den Generator erzeugte elektrische Netz hart aufzuschalten. Durch die Erregerregelung des Generators wird die hierbei benötigte Leistung des zugeschalteten Verdichters so weit reduziert, dass der Verdichter hart auf das elektrische Netz aufgeschaltet und hochgefahren werden kann. Positiv wirkt sich hierbei die Modularität des Kühlsystems aus, das eine Reduzierung des Lastmoments beim harten Zuschalten des Verdichters auf das elektrische Netz mit sich bringt, da die benötigte Gesamtkälteleistung auf mindestens zwei Kältekreisläufe bzw. mindestens zwei Verdichter aufteilbar ist. Dies führt insgesamt zu einer Verringerung der zu überwindenden Lastmomente pro Verdichter. Im Ergebnis reicht dann die vom Generator zur Verfügung gestellte Leistung aus, um jeden Verdichter mit dem ihm eigenen Lastmoment auf das elektrische Netz hart aufzuschalten und hochzufahren.

Durch die Kombination einer Modularisierung des Kühlsystems und der geregelten Generatorerregung ist man damit in der Lage, das gesamte Kühlsystem bzw. mehrere Verdichter des Kühlsystems hintereinander hochzufahren und zu betreiben. Dabei kann auf eine komplexe Regelung bzw. auf eine Überdimensionierung des Generators oder einer dem Generator antreibenden Primärquelle verzichtet werden.

Die Erfindung erlaubt daher einen besonders einfachen strukturellen Aufbau, der keine komplexe Regelung oder eine Überdimensionierung eines Generators erfordert. Insgesamt ist damit ein Kühlsystem geschaffen worden, das denjenigen bisher bekannten aus dem Stand der Technik überlegen ist.

## Patentansprüche

1. Kühlsystem zum Kühlen einer Transporteinheit, umfassend:
einen Synchrongenerator zum Bereitstellen einer Energieversorgung für das Kühlsystem, und
mindestens ein an die Energieversorgung angebundenes Kältekreismodul, das mindestens eine schaltbare Antriebseinheit für ein Kältekreismodulelement aufweist, wobei
der Synchrongenerator über eine Erregerregelung verfügt,
**dadurch gekennzeichnet, dass**
die Erregerregelung dazu ausgelegt ist, eine bei einem harten Zuschalten der Antriebseinheit erforderliche Blindleistung durch ein entsprechendes Regeln des Synchrongenerators bereitzustellen, wobei
die Erregerregelung des Synchrongenerators über den Erregerstrom des Synchrongenerators erfolgt und die Höhe und die Steigung des Erregerstroms abhängig von dem aktuellen Lastmoment der Antriebseinheit sind,
die Erregerregelung des Synchrongenerators dazu ausgelegt ist, die benötigte Leistung des Kältekreismodulelements soweit zu reduzieren, dass ein hartes Aufschalten des Kältekreismodulelements auf das vom Synchrongenerator erzeugte elektrische Netz möglich ist, und
die Antriebseinheit für das Kältekreismodulelement ein asynchroner Elektromotor ist.

2. System nach einem der vorhergehenden Ansprüche, ferner umfassend eine Regeleinheit, die ein Kennfeld aufweist, in welchem eine Höhe und eine Steigung eines für eine Erregerregelung verwendeten Erregerstroms in Abhängigkeit von einem Lastmoment der Antriebseinheit abgelegt sind, wobei vorzugsweise die Regeleinheit mit der Erregerregelung zusammenwirkt.

3. System nach Anspruch 2, ferner umfassend eine Erfassungseinheit zum Erfassen eines Lastmoments der Antriebseinheit, wobei die Erregerregelung ferner dazu ausgelegt ist, die Höhe und die Steigung des Erregerstroms auf die zu dem erfassten Lastmoment zugehörigen Werte des Kennfelds zu setzen.

4. System nach Anspruch 2 oder 3, wobei das Kennfeld in Abhängigkeit der Alterung des mindestens einen Kältekreismoduls und/oder des Synchrongenerators angepasst wird.

5. System nach einem der vorhergehenden Ansprüche, wobei das Kältekreismodulelement ein Verdichter, ein Verdampferlüfter oder ein Verflüssigerlüfter ist.

6. System nach einem der vorhergehenden Ansprüche, ferner umfassend mindestens zwei, vorzugsweise drei, Kältekreismodule, die jeweils an die vom Synchrongenerator bereitgestellte Energieversorgung angebunden sind.

7. System nach einem der vorhergehenden Ansprüche, ferner umfassend eine Primärenergiequelle, die den Synchrongenerator antreibt, wobei die Primärenergiequelle vorzugsweise eine Verbrennungskraftmaschine, bevorzugterweise ein Dieselmotor ist.

8. System nach einem der vorhergehenden Ansprüche, wobei das mindestens eine Kältekreismodul zwei oder mehr Verdichter aufweist, die jeweils über eine Antriebseinheit verfügen.

9. System nach einem der vorhergehenden Ansprüche, wobei das Kältekreismodul einen Verdichter, einen Verdampfer, eine Drossel und einen Verflüssiger umfasst, wobei vorzugsweise der Verdampfer und/oder der Verflüssiger mit einem Lüfter versehen ist.

10. 11. System nach einem der vorhergehenden Ansprüche, wobei das Kältekreismodulelement eine Leistungsfaktorkorrekturregelung aufweist, um eine etwa sinusförmige Stromaufnahme am Synchrongenerator zu ermöglichen.

11. System nach einem der vorhergehenden Ansprüche, wobei die Primärquelle eine Leistung von 18,9 Kilowatt, vorzugsweise von 18,4 kW nicht übersteigt.

## Claims

1. Cooling system for cooling a transport unit, comprising:
a synchronous generator for providing an energy supply for the cooling system, and
at least one refrigeration circuit module connected to the energy supply, which module comprises at least one switchable drive unit for a refrigeration circuit module element, wherein
the synchronous generator comprises an exciter control,
**characterized in that**
the exciter control is configured to provide a reactive power, which is required when the drive unit is switched on hard, by appropriately controlling the synchronous generator, wherein
the excitation control of the synchronous generator takes place via the excitation current of the synchronous generator and the level and slope of the excitation current are preferably dependent on the current load torque of the drive unit,
the excitation control of the synchronous generator is configured to reduce the required power of the refrigeration circuit module element to such an extent that a hard connection of the refrigeration circuit module element to the electrical network generated by the synchronous generator is possible, and
the drive unit for the refrigerant module element is an asynchronous electric motor.

2. System according to one of the preceding claims, further comprising a control unit which comprises a characteristic map in which a level and a slope of an excitation current used for excitation control are stored as a function of a load torque of the drive unit, wherein the control unit preferably interacts with the excitation control.

3. System according to claim 2, further comprising a detection unit for detecting a load torque of the drive unit, wherein the excitation control system is also configured to set the level and the slope of the excitation current to the values of the characteristic map associated with the detected load torque.

4. System according to claim 2 or 3, wherein the characteristic map is adapted as a function of the aging of the at least one refrigeration circuit module and/or the synchronous generator.

5. System according to one of the preceding claims, wherein the refrigeration circuit module element is a compressor, an evaporator fan or a condenser fan.

6. System according to one of the preceding claims, further comprising at least two, preferably three, refrigeration circuit modules, each of which is connected to the energy supply provided by the synchronous generator.

7. System according to one of the preceding claims, further comprising a primary energy source driving the synchronous generator, wherein the primary energy source preferably is an internal combustion engine, more preferably a diesel engine.

8. System according to one of the preceding claims, wherein the at least one refrigeration circuit module comprises two or more compressors, each of which comprises a drive unit.

9. System according to one of the preceding claims, wherein the refrigeration circuit module comprises a compressor, an evaporator, a throttle and a condenser, wherein preferably the evaporator and/or the condenser is provided with a fan.

10. System according to one of the preceding claims, wherein the refrigeration circuit module element comprises a power factor correction control to allow an approximately sinusoidal take-up of current at the synchronous generator.

11. System according to one of the preceding claims, wherein the primary source does not exceed a power of 18.9 kW, preferably of 18.4 kW.

## Revendications

1. Système de refroidissement pour refroidir une unité de transport, comprenant :
un générateur synchrone pour fournir une alimentation en énergie pour le système de refroidissement, et
au moins un module de circuit frigorifique raccordé à l'alimentation en énergie, qui présente au moins une unité d'entraînement pouvant être commutée pour un élément de module de circuit frigorifique, dans lequel
le générateur synchrone dispose d'un dispositif de régulation d'excitation,
**caractérisé en ce que**
le dispositif de régulation d'excitation est conçu pour fournir une puissance réactive nécessaire lors d'une activation difficile de l'unité d'entraînement par une régulation correspondante du générateur synchrone, dans lequel
la régulation d'excitation du générateur synchrone est effectuée par l'intermédiaire du courant d'excitation du générateur synchrone et l'intensité et l'augmentation du courant d'excitation dépendent du couple de charge instantané de l'unité d'entraînement,
le dispositif de régulation d'excitation du générateur synchrone est conçu pour réduire la puissance requise de l'élément de module de circuit frigorifique à un point qu'un enclenchement difficile de l'élément de module de circuit frigorifique sur le réseau électrique généré par le générateur synchrone soit possible, et
l'unité d'entraînement pour l'élément de module de circuit frigorifique est un moteur électrique asynchrone.

2. Système selon la revendication précédente, comprenant en outre une unité de régulation qui présente un champ caractéristique, dans lequel une intensité et une augmentation d'un courant d'excitation utilisé pour une régulation d'excitation sont sauvegardées en fonction d'un couple de charge de l'unité d'entraînement, dans lequel de préférence l'unité de régulation coopère avec le dispositif de régulation d'excitation.

3. Système selon la revendication 2,
comprenant en outre une unité de détection pour détecter un couple de charge de l'unité d'entraînement, dans lequel le dispositif de régulation d'excitation est conçue en outre pour établir l'intensité et l'augmentation du courant d'excitation sur les valeurs du champ caractéristique relevant du couple de charge détecté.

4. Système selon la revendication 2 ou 3, dans lequel le champ caractéristique est adapté en fonction du vieillissement de l'au moins un module de circuit frigorifique et/ou du générateur synchrone.

5. Système selon l'une quelconque des revendications précédentes, dans lequel l'élément de module de circuit frigorifique est un compresseur, un ventilateur d'évaporateur ou un ventilateur de condenseur.

6. Système selon l'une quelconque des revendications précédentes, comprenant en outre au moins deux, de préférence trois, modules de circuit frigorifique, qui sont raccordés respectivement à l'alimentation en énergie fournie par le générateur synchrone.

7. Système selon l'une quelconque des revendications précédentes, comprenant en outre une source d'énergie primaire, qui entraîne le générateur synchrone, dans lequel la source d'énergie primaire est de préférence un moteur à combustion interne, de manière préférée un moteur diesel.

8. Système selon l'une quelconque des revendications précédentes, dans lequel l'au moins un module de circuit frigorifique présente deux condenseurs ou plus, qui disposent respectivement d'une unité d'entraînement.

9. Système selon l'une quelconque des revendications précédentes, dans lequel le module de circuit frigorifique comprend un compresseur, un évaporateur, un étrangleur et un condenseur, dans lequel de préférence l'évaporateur et/ou le condenseur sont pourvus d'un ventilateur.

10. Système selon l'une quelconque des revendications précédentes, dans lequel l'élément de module de circuit frigorifique présente un dispositif de régulation de correction de facteur de puissance pour permettre une consommation de courant approximativement sinusoïdale sur le générateur synchrone.

11. Système selon l'une quelconque des revendications précédentes, dans lequel la source primaire ne dépasse pas une puissance de 18,9 kilowatts, de préférence de 18,4 kW.
